(19) **Europäisches Patentamt European Patent Office Office européen des brevets**

(11) **EP 1 329 464 B1**

(12) **EUROPEAN PATENT SPECIFICATION**

(45) Date of publication and mention of the grant of the patent:
**03.07.2019 Bulletin 2019/27**

(51) Int Cl.:
*C08F 236/04* (2006.01)     *C08F 279/04* (2006.01)
*C08F 6/22* (2006.01)

(21) Application number: **03000506.0**

(22) Date of filing: **09.01.2003**

(54) **Agglomeratable rubber latex**

Agglomeration eines Kautschuklatex

Agglomération d'un latex de caoutchouc

(84) Designated Contracting States:
**DE ES FR GB IT NL**

(30) Priority: **18.01.2002 US 52611**

(43) Date of publication of application:
**23.07.2003 Bulletin 2003/30**

(73) Proprietor: **Ineos ABS (Jersey) Limited Channel Islands (GB)**

(72) Inventor: **Padwa, Allen R. Worchester MA 01602 (US)**

(74) Representative: **Smith, Julian Philip Howard et al Mathisen & Macara LLP Communications House South Street Staines-upon-Thames, Middx TW18 4PR (GB)**

(56) References cited:
**US-A- 5 290 867     US-A- 5 468 788**

**Description**

FIELD OF THE INVENTION

The invention relates to the preparation of readily agglomeratable rubber particles.

SUMMARY OF THE INVENTION

A method for making readily agglomeratable rubber latex is disclosed. The emulsion polymerization of suitable monomers in the presence of an alkalipersulfate initiator and the optional presence of salt are known. The invention is based on the finding of the critical relationship between the amount of decomposed alkalipersulfate (W) and the particle size of the pre-agglomerated rubber particles ($D_o$). Accordingly, the relevant parameters relate as

$$K = W * (1- 1.4S) * D_o$$

wherein S is the amount of the optional salt and K is a constant of 2.3-6.0. The pre-agglomerated rubber particles thus produced are agglomerated to a size of at least $1.5D_o$ by the mixing therewith of an agglomerating agent.

BACKGROUND OF THE INVENTION

Rubber latices have long been used in the manufacture of rubber reinforced plastics such as (acrylonitrile-butadiene-styrene) ABS resins. It is well known that the properties of the reinforced plastics, most notably their mechanical properties and especially impact strength are critically dependent on the size of the rubber particles. The control of particle size in the context of emulsion polymerization is therefore of interest.
The polymerization processes typically make use of an initiator, such as persulfate. The resulting latex is characterized by the relatively small particle size that do not agglomerate well.
The art includes disclosures relative to chemical agglomeration for the production of large rubber particles from small rubber particles. Facilitating agglomeration has been reported to be attained by the addition of water-soluble organic acids or organic anhydrides. U.S. Patent 3,558,541 disclosed an agglomeration process whereby an acid anhydride is admixed with an aqueous latex of a polymer that contains an organic acid salt emulsifying agent and the admixture permitted to stand for a period of time sufficient to hydrolize the acid anhydride and produce agglomeration of the polymer particles. U.S. Patent 5,468,788 disclosed a process for agglomerating small rubber particles involving the addition of a water-soluble organic acid and water-soluble organic anhydride to the latex prior to agglomeration. The resulting particles are said to be essentially free of coagulum.
U.S. patent 5,290,867 disclosed a process for producing an emulsion graft copolymer by grafting styrene and other comonomer onto a rubber latex in presence of iron redox system. In particular, the rubber latex styrene/butadiene is obtained by mixing 10% of total monomers with potassium persulfate in an amount of 0.12 pphm. An hour after initiation of the polymerisation, the remaining monomers are continuously added for 5 hours for further polymerisation. The latex obtained has a particle size in the range of 50 nm to 1000 nm and a solid content of 41%. The rubber latex is further agglomerated.
The present invention is predicated on the surprising finding of the critical dependence of the capacity of the polymerized rubber to agglomerate on the amount of initiator.

DETAILED DESCRIPTION OF THE INVENTION

The polymerization of suitable monomers to form latex is known. It is carried out in the presence of an alkalipersulfate initiator and the optional presence of salt. The capacity of the polymerized rubber to agglomerate was found to be profoundly dependant on the conditions of the synthesis of the latex.
The inventive process that yields readily agglomeratable rubber particles that are substantially free of coagulum comprise emulsion polymerization of suitable monomers in the presence of an alkalipersulfate initiator and the optional presence of salt. The invention is based on the finding of the critical relationship between the amount of decomposed alkalipersulfate (W) and the particle size of the pre-agglomerated rubber particles ($D_o$). Accordingly, the relevant parameters relate as

$$K = W * (1- 1.4S) * D_o$$

wherein S is the amount of the optional salt and K is a constant of 2.3-6.0.

The pre-agglomerated rubber particles thus produced are agglomerated to a size of at least $1.5D_o$ by the mixing therewith of an agglomerating agent.

In the expression above

W      denotes the amount, in parts per one hundred parts by weight (pphr) of latex solids, of decomposed alkalipersulfate,

$D_o$      refers to the weight average particle size, in nanometers (nm), of the pre-agglomerated (un-agglomerated) rubber, with the proviso that

Do      is at least 85 nm, preferably at least 100 nm,

S      is the amount of the optional salt (in % based on latex solids) and,

K      is a constant of 2.3-6.0, preferably 3-4, most preferably 3.25-3.50.

The resulting rubber particles having particle size $D_o$ are agglomerated to form particles having size D wherein $D/D_o$ is at least 1.5 by mixing an agglomerating agent, preferably an organic acid anhydride, therewith.

The monomers suitable in the process of the present invention are selected from among 1,3-dienes and (meth)acrylates. Both homopolymers and copolymers are suitable. The suitable comonomers include monvinylidene aromatic hydrocarbons (e.g., styrene; an alkylstyrene, such as the o-, m-, and p-methylstyrene, 2,4-dimethylstyrene, ethylstyrene, p-tert-butylstyrene;) and alpha-alkylstyrene, such as alphamethylstyrene, alpha-ethylstyrene, alpha-methyl-n-methylstyrene; vinyl naphthalene; acrylonitrile; methacrylonitrile; alkyl (meth)acrylates (e.g., methyl (meth)acrylate, butyl (meth)acrylate, 2-ethylhexyl (meth)acrylate) and acrylamides (e.g., acrylamide, methacrylamide, N-butyl acrylamide). Preferably the process entails the polymerization of monomer systems containing 75 to 100 percent by weight of butadiene and/or isoprene and up to 25 percent by weight of at least one member selected from the group consisting of monovinylidene aromatic hydrocarbons (e.g., styrene) and unsaturated nitriles (e.g., acrylonitrile). Particularly advantageous systems contain 1,3-butadiene or a mixture of 80 to 95 percent by weight butadiene and 5 to 20 percent by weight of acrylonitrile and/or styrene.

The polymerized rubber may be crosslinked. Crosslinking such as by the inclusion of up to about 2 percent by weight - based on the weight of the rubber-forming monomer or monomers- of a cross-linking agent is attained by procedures and agents that are well known in the art. Suitable cross-linking agents include divinylbenzene, diallyl maleate, diallyl fumarate, diallyl adipate, allyl acrylate, allylmethacrylate, diacrylates and dimethacrylates of polyhydric alcohols, e.g., ethylene glycol dimethacrylate.

The small rubber particles are prepared by emulsion polymerization. As is well known in the art of emulsion polymerization, the procedure entails polymerizing monomers in a mixture that contains water, emulsifying agent, optional salt, optional chain transfer agent and an initiator in relative amounts such that the solids content of the resulting latex is 20 to 70% by weight, preferably 30 to 60% and most preferably 40 to 50%. As is well known, the polymerization may also be carried out by using seed in the form of latex of small particle size, typically particles having a diameter of 1/2 or less of the desired particle size of the resulting latex. The compositional makeup of the seed is independent of that of the polymerized rubber. For example, a polybutadiene latex polymerization may be seeded by poly(butadiene-co-styrene) or polybutadiene seed latex.

Suitable emulsifying agents include organic carboxylic acid salts. These include alkali salts of fatty acids (in particular lauric acid, oleic acid, steric acid, palmitic acid, and their mixtures) and derivatives of rosin acids. Minor amounts of acid-stable anionic surfactants, such as alkyl or alkaryl sulfates, sulfonates, phosphates and mixtures thereof, may be added in small amounts as their presence affects the agglomeration behavior of the latex. Preferably no acid-stable anionic surfactants are used. Generally, the emulsifying agent is used in an amount of about 0.05 to 15 parts, preferably 0.1 to 5 parts, per 100 parts of latex solids.

Optional salts include alkali salts such as alkali halides, nitrates, sulfates, phosphates, pyrophosphates, preferably sodium sulfate, sodium chloride or potassium chloride. The amount of the salt is 0 to 0.6 percent relative to the latex solids.

It is often desirable to include chain transfer agents. These agents include mercaptans, halides, or terpenes. The preferred chain transfer agents are alkyl mercaptans at a concentration of 0.01 to 2.0% based on latex solids.

The polymerization is initiated by alkali persulfates although other free-radical polymerization initiators may additionally be used, including actinic radiation, azo initiators and organic peroxides which may be activated to form a redox system. Preferred initiators are alkali persulfates, such as sodium or potassium persulfates.

The amount of persulfate decomposed during the polymerization (W) is determined as the difference between the total amount of persulfate added and the amount of residual persulfate in the latex at the end of polymerization, e.g., by iodometric titration, or by calculation.

The resulting small rubber particles having particle size $D_o$ are agglomerated by admixing therewith an agglomerating agent. Suitable agglomerating agents include organic acid anhydrides and an optional aqueous solution of an organic acid.

As has been indicated, a latex having a weight average particle size, $D_0$, of 0.085 to 0.20 microns may be agglomerated to preferably provide a weight average particle size diameter, D, of 0.125 to 1.2 microns. Preferably, the initial latex has small rubber particles having a weight average particle size diameter, $D_0$, of 0.085 to 0.13 microns which are agglomerated to form a latex containing large rubber particles having a weight average particle size diameter, D, of 0.30 to 0.60 microns, and preferably at least 0.4 microns.

In the preferred agglomeration process, an aqueous solution of an organic acid anhydride is added to the rubber latex thus prepared and dispersed therein.

Organic acid anhydrides are suitable as agglomerating agents in the present context and include such acid anhydrides that are water soluble to an extent sufficient to hydrolyze and provide acid radicals for reaction with the emulsifying agent to reduce the stability of the latex and allow particle agglomeration. Typical acid anhydrides are acetic acid anhydride, maleic acid anhydride, and propionic acid anhydride and the like. Water soluble organic acid may also be added in the agglomeration step. These acids include acetic acid, maleic acid, propionic acid, acrylic acid and oxalic acid. Generally, the amount of agglomerating agent employed will vary with the electrolyte and emulsifying agent present in the latex, the desired size of large rubber particles to be obtained and will be at least one-tenth the molar equivalent of the emulsifying agent. Normally, the amount employed is at least one-fourth the molar equivalent and preferably the amount added is in excess of the molar amount of the emulsifying agent.

The latex is briefly mixed with the agglomerating agent and then allowed to stand undisturbed until the organic anhydride hydrolysis deactivates the emulsifying agent and causes agglomeration of the rubbery particles. Substantial shear agitation during this stage of the process is to be avoided to prevent coagulation. The agglomeration may be carried out in either a batch or continuous fashion. After the agglomeration has been completed, the latex may be stabilized by the addition of a base or a surfactant.

The time for agglomeration will vary with temperature, the amount of agglomerating and emulsifying agent, the nature of the rubbery polymer, the amount of the initial and desired sizes of the particles. Periods of five minutes to ten hours may be employed; typically, times of about five minutes to two hours may be employed at ambient temperatures.

After the agglomeration has been completed, the latex may be stabilized by adding an acid-stable emulsifier or by the regeneration of the initial soap emulsifier by the addition of a basic compound to neutralize the acid. Suitable emulsifiers include anionic agents such as alkali metal salts of long chain sulfonic acids. An alkali metal hydroxide or other basic compound such as carbonate may be added to regenerate the carboxylic acid soap; the amount added will normally be the stoichiometric equivalent of the agglomerating agent although lesser amounts may be employed with some lessening in stability of the latex.

A stable emulsion suitable for subsequent processing includes the particles colloidally dispersed in the latex having a pH value of 8.0 to 13.0, preferably 9.0 to 11.0.

The invention is further illustrated but is not intended to be limited by the following examples in which all parts and percentages are by weight unless otherwise specified.

<u>EXAMPLES</u>

**Experimental**

1. A seed polybutadiene latex of about 50nm particle size was charged to an autoclave containing $Na_2SO_4$ (see explanation below), 1 mole of KOH per mole of persulfate to be used in the polymerization and dilution water to result in latex containing 42% solids. The autoclave was purged with nitrogen during heating to 75°C. 10% of the total monomer (or mixture of monomers) and 10% of the chain transfer agent were first charged. The addition of a 0.02 pphm (part per one hundred monomer) of potassium persulfate marked the beginning of the polymerization cycle. The remaining persulfate was linearly metered over 840 minutes. At 45 minutes, the remaining monomers and chain transfer agent were linearly metered until 465 minutes. 1.0 pphm of Dresinate 731A soap (Hercules Inc, rosin acid) were metered from 90 to 780 minutes. At about 570 minutes, the initial batch pressure of about 140 psi decreased to about 130 psi. The temperature was than raised over a period of 45 minutes to 85°C. The batch was cooled at about 950 minutes concurrent with the pressure decrease to 50 psi. The resulting $D_0$ values are shown in the table as examples 4-8.

2. The procedure described above was used except that the amount of seed latex was increased, following the usual seeded-latex calculation rules; the amount of Dresinate 731A soap was 1.5 pphm. All the potassium persulfate was added at the start of the polymerization cycle. The monomers were metered from 45 to 240 minutes and the soap was metered from 90 to 330 minutes. The batch was cooled at 360 minutes.

For experiment #3, the polymerization was started at 60°C. Monomer and soap feeding rates were adjusted to complete the polymerization in 30 hours. After the pressure break, the batch was heated to 65°C until pressure of 50 psi was achieved. The $D_0$ values are reported in Examples 1-3.

The agglomeration of the resulting latices was carried out as follows:

To 100 grams of rapidly stirring latex, there was added rapidly a freshly prepared solution of 0.4 ml of Acetic Anhydride dissolved in 10 ml of Water. Stirring was continued for 30 seconds and then stopped and the system allowed to rest undisturbed for 30 minutes. Then 10 ml of a 10% aqueous solution of sodium dodecyldiphenylether disulfonate (Calfax®) surfactant was added slowly, followed by mild agitation.

The table below summarizes the results of several experiments demonstrating the invention. Essentially, these experiments show the effect of the amount of potassium persulfate initiator (herein KPS) on the agglomeration behavior of latex.

All the experiments, except example 3 that contained no salt, contained 0.5 pphm of $Na_2SO_4$. Example 4 is a comparative example. The particle size was measured on a BI-90 photon correlation spectrometer manufactured by Brookhaven Instruments Corp., Holtsville, New York.

**Table 1**

| Example | Rubber type[1] | Do (nm) | KPS charged (pphm) | D (nm) | D/Do | K |
|---|---|---|---|---|---|---|
| 1 | BD/Sty | 129 | 0.15 | 296 | 2.3 | 5.8 |
| 2(comp)[3] | BD/Sty | 132 | 0.05 | 1654 | **12.7** | **2.0** |
| 3[2] | BD | 130 | 0.12 | 450 | 3.5 | 2.7 |
| 4(comp) | BD/Sty | 193 | 0.3 | 180 | **0.9** | **17.4** |
| 5 | BD/Sty | 191 | 0.1 | 300 | 1.6 | 5.7 |
| 6 | BD/Sty | 190 | 0.07 | 580 | 3.1 | 4.0 |
| 7 | BD/Sty | 182 | 0.06 | 620 | 3.4 | 3.3 |
| 8 | BD | 208 | 0.07 | 700 | 3.4 | 4.4 |

[1] BD denoted butadiene, Sty denotes styrene. BD/Sty denotes 90 wt. % butadiene/10 wt. % styrene); In all instances the monomers contained 0.6 wt % of t-dodecyl mercaptan) chain transfer agent.

[2] In the preparation of Example 3, KPS in an amount of 0.12 pphm was charged but 0.021 pphm were decomposed. In the remaining examples, all the KPS was decomposed.

[3] Except for Example 2, the agglomerated latices of the examples above included virtually no coagulum, that is less than 0.2%, relative to the weight of the latex solids. The latex of Example 2 contained coagulum in an amount greater than 5%.

Although the invention has been described in detail in the foregoing for the purpose of illustration, it is to be understood that such detail is solely for that purpose and that variations can be made therein by those skilled in the art without departing from the scope of the invention except as it may be limited by the claims.

## Claims

1. A process for making an agglomerate of rubber latex having agglomerate particle size, D, measured in nanometers, comprising

    (i) polymerizing a material system containing an emulsion of at least one monomer for making a rubber latex in the presence of a alkalipersulfate initiator and the optional presence of salt, to obtain latex having pre-agglomerated particle size, in nanometers, $D_o$,
    (ii) mixing the latex obtained in (i) with an agglomerating agent,
    **characterised in that** the quantity, in pphr, of decomposed alkalipersulfate, W, relates to $D_o$ as $K=W*(1-1.4S)*D_o$ where S is the amount, in percent relative to the weight of solids in the rubber latex, of the optional salt and K is a constant of 2.3-6.0, with the proviso that is $D_o$ at least 85nm and $D/D_o$ is at least 1.5.

2. The process of Claim 1 wherein K is 3-4.

3. The process of Claim 1 wherein K is 3.25-3.50.

**4.** The process of Claim 1 wherein $D_O$ is at least 100nm.

**5.** The process of Claim 1 wherein monomer is at least one member selected from the group consisting of 1,3-dienes and (meth)acrylates.

**6.** The process of Claim 5 wherein monomers further include at least one member selected from the group consisting of styrene, alkylstyrene, vinyl naphthalene; (meth)acrylonitrile and acrylamide.

**7.** The process of Claim 1 wherein the material systems contains 75 to 100 percent by weight of butadiene and/or isoprene and up to 25 percent by weight of at least one member selected from the group consisting of monovinylidene aromatic hydrocarbons and unsaturated nitriles.

**8.** The process of Claim 1 wherein the material system contains 1,3-butadiene.

**9.** The process of Claim 1 wherein the material system is a mixture of 80 to 95 percent by weight of butadiene and 5 to 20 percent by weight of acrylonitrile and/or styrene.

**10.** The process of claim 1 wherein agglomerating agent is an organic acid anhydride.

**11.** The process of Claim 10 wherein agent further contains an aqueous solution of an organic acid.

**12.** The process of Claim 1 wherein emulsion further contains a cross linking agent.

**13.** The process of Claim 12 wherein crosslinking agent is a member selected from the group consisting of divinylbenzene, diallyl maleate, diallyl fumarate, diallyl adipate, allyl acrylate, allylmethacrylate, diacrylates and dimethacrylates of polyhydric alcohols.


**Patentansprüche**

**1.** Verfahren zur Herstellung eines Agglomerats von Kautschuklatex mit einer in Nanometern gemessenen Agglomerat-Teilchengröße D, das Folgendes umfasst

(i) Polymerisieren eines Materialsystems, das eine Emulsion von mindestens einem Monomer zur Herstellung eines Kautschuklatex enthält, in Gegenwart eines Alkalipersulfat-Initiators und gegebenenfalls in Gegenwart von Salz zum Erhalt von Latex mit einer Teilchengröße $D_O$ in Nanometern vor der Agglomeration,
(ii) Mischen des in (i) erhaltenen Latex mit einem Agglomerationsmittel,
**dadurch gekennzeichnet, dass** die Menge von zersetztem Alkalipersulfat W in pphr sich zu $D_O$ verhält wie K=W*(1-1,4S)*$D_O$, wobei S die Menge des fakultativen Salzes in Prozent, bezogen auf das Feststoffgewicht in dem Kautschuklatex, ist und K eine Konstante von 2,3-6,0 ist, mit der Maßgabe, dass $D_O$ mindestens 85 nm beträgt und D/$D_O$ mindestens 1,5 beträgt.

**2.** Verfahren nach Anspruch 1, wobei K 3-4 beträgt.

**3.** Verfahren nach Anspruch 1, wobei K 3,25-3,50 beträgt.

**4.** Verfahren nach Anspruch 1, wobei $D_O$ mindestens 100 nm beträgt.

**5.** Verfahren nach Anspruch 1, wobei es sich bei dem Monomer um mindestens ein Mitglied aus der Gruppe bestehend aus 1,3-Dienen und (Meth)Acrylaten handelt.

**6.** Verfahren nach Anspruch 5, wobei Monomere ferner mindestens ein Mitglied aus der Gruppe bestehend aus Styrol, Alkylstyrol, Vinylnaphthalin, (Meth)Acrylnitril und Acrylamid einschließen.

**7.** Verfahren nach Anspruch 1, wobei das Materialsystem 75 bis 100 Gewichtsprozent Butadien und/oder Isopren und bis zu 25 Gewichtsprozent mindestens eines Mitglieds aus der Gruppe bestehend aus monovinylidenaromatischen Kohlenwasserstoffen und ungesättigten Nitrilen enthält.

**8.** Verfahren nach Anspruch 1, wobei das Materialsystem 1,3-Butadien umfasst.

**9.** Verfahren nach Anspruch 1, wobei es sich bei dem Materialsystem um eine Mischung von 80 bis 95 Gewichtsprozent Butadien und 5 bis 20 Gewichtsprozent Acrylnitril und/oder Styrol handelt.

**10.** Verfahren nach Anspruch 1, wobei es sich bei dem Agglomerationsmittel um ein organisches Säureanhydrid handelt.

**11.** Verfahren nach Anspruch 10, wobei das Mittel ferner eine wässrige Lösung einer organischen Säure enthält.

**12.** Verfahren nach Anspruch 1, wobei die Emulsion ferner ein Vernetzungsmittel enthält.

**13.** Verfahren nach Anspruch 12, wobei es sich bei dem Vernetzungsmittel um ein Mitglied aus der Gruppe bestehend aus Divinylbenzol, Diallylmaleat, Diallylfumarat, Diallyladipat, Allylacrylat, Allylmethacrylat und Diacrylaten und Dimethacrylaten von mehrwertigen Alkoholen handelt.


**Revendications**

**1.** Procédé de fabrication d'un agglomérat de latex d'élastomère-caoutchouc ayant une taille de particule d'agglomérat, D, mesurée en nanomètres, comprenant :

（i) la polymérisation d'un système de matériaux contenant une émulsion d'au moins un monomère pour la fabrication d'un latex d'élastomère-caoutchouc en présence d'un initiateur persulfate alcalin et optionnellement en présence d'un sel, pour obtenir un latex ayant une taille de particule pré-agglomérée, en nanomètres, $D_o$,
(ii) le mélange du latex obtenu à l'étape (i) avec un agent agglomérant,
**caractérisé en ce que** la quantité, en pphr, de persulfate alcalin décomposé, W, correspond à $D_o$ selon $K = W * (1-1,4 S) * D_o$
où S est la quantité, en pourcentage relativement au poids de solides dans le latex d'élastomère-caoutchouc, du sel facultatif, et K est une constante de 2,3-6,0, sous réserve que $D_o$ ait une valeur d'au moins 85 nm et que le rapport $D/D_o$ soit d'au moins 1,5.

**2.** Procédé selon la revendication 1, dans lequel K vaut 3-4.

**3.** Procédé selon la revendication 1, dans lequel K vaut 3,25-3,50.

**4.** Procédé selon la revendication 1, dans lequel $D_o$ vaut au moins 100 nm.

**5.** Procédé selon la revendication 1, dans lequel le monomère est au moins un élément sélectionné dans le groupe constitué de 1,3-diènes et de (méth)acrylates.

**6.** Procédé selon la revendication 5, dans lequel les monomères comprennent en outre au moins un élément sélectionné dans le groupe constitué du styrène, de l'alkylstyrène, du vinylnaphtalène, du (méth)acrylonitrile et de l'acrylamide.

**7.** Procédé selon la revendication 1, dans lequel le système de matériaux contient 75 à 100 % en poids de butadiène et/ou d'isoprène et jusqu'à 25 % en poids d'au moins un élément sélectionné dans le groupe constitué d'hydrocarbures aromatiques de monovinylidène et de nitriles.

**8.** Procédé selon la revendication 1, dans lequel le système de matériaux contient du 1,3-butadiène.

**9.** Procédé selon la revendication 1, dans lequel le système de matériaux est un mélange de 80 à 95 % en poids de butadiène et de 5 à 20 % en poids d'acrylonitrile et/ou de styrène.

**10.** Procédé selon la revendication 1, dans lequel l'agent agglomérant est un anhydride d'acide organique.

**11.** Procédé selon la revendication 10, dans lequel l'agent contient en outre une solution aqueuse d'un acide organique.

**12.** Procédé selon la revendication 1, dans lequel l'émulsion contient en outre un agent de réticulation.

13. Procédé selon la revendication 12, dans lequel l'agent de réticulation est un élément sélectionné dans le groupe constitué du divinylbenzène, du maléate de diallyle, du fumarate de diallyle, de l'adipate de diallyle, de l'acrylate d'allyle, du méthacrylate d'allyle, de diacrylates et de diméthacrylates d'alcools polyhydriques.

**EP 1 329 464 B1**

**REFERENCES CITED IN THE DESCRIPTION**

**Patent documents cited in the description**

- US 3558541 A
- US 5468788 A
- US 5290867 A